# EUROPEAN PATENT SPECIFICATION

(11) **EP 2 796 078 B1**
(45) Date of publication and mention of the grant of the patent: **10.10.2018**
(21) Application number: 14164303.1
(22) Date of filing: 10.04.2014
(51) Int. Cl.: A47J 41/00, B65D 47/30

(54) **Plug assembly for beverage container**
Verschluss für Getränkebehälter
Bouchon pour récipient de boisson

(30) Priority: 22.04.2013 JP 2013089286
(43) Date of publication of application: 29.10.2014
(73) Proprietor: Thermos K.K., Tsubame-shi, Niigata-ken (JP); Thermos Limited Liability Company, Schaumburg, IL 60173 (US)
(72) Inventor: Tajima, Tomohiko, Niigata-ken (JP); Matsuyama, Shin, Niigata-ken (JP)
(74) Representative: Barker Brettell LLP

(56) References cited:
- EP-A2- 0 163 535
- DE-U1- 8 319 769
- FR-A1- 2 550 766
- US-A- 4 488 660

## Description

### BACKGROUND OF THE INVENTION

### Field of the invention

The present invention relates to a plug assembly for a beverage container equipped with a plug assembly by means of screws.

### Description of Related Art

Conventionally, as such a kind of plug assembly attached to a liquid container such as a thermos bottle, there have been known structures disclosed in, for example, Japanese Patent No.4203912, JP-A-Hei 10-75902 and JP-A-Hei 8-71005. The structure disclosed in Japanese Patent No.4203912 includes: a plug body detachably attached to a cylindrical mouth that is formed on the upper portion of a container body; and a lid that is pivotally disposed on the upper portion of the plug body in the vertical direction and serves to open or close an upper opening section of the plug body. Particularly, a flow passage is opened or sealed by opening or closing the lid. As for the structure disclosed in JP-A-Hei 10-75902, a shoulder member is fixedly attached to an edge of a liquid container body. Particularly, this shoulder member has: a flow passage built therein; and a discharge outlet as a pour spout formed on the exterior portion thereof. More particularly, a plug body is detachably screwed to this shoulder member, and a flow passage is opened or sealed by loosening or clenching the plug body. The structure disclosed in JP-A-Hei 8-71005 includes: a plug body composed of an inner cylindrical portion as an inner plug and an outer cylindrical portion as an outer plug; and a valve body serving to open or close the lower end portion of the outer cylindrical portion. Particularly, the plug body can be detachably attached to a container body, and has a liquid passage formed between the inner cylindrical portion and the outer cylindrical portion. More particularly, this liquid passage is opened or closed by the valve body. DE8319769 U1 shows a castle screw cap with a head part, annular flange on which ribs are provided and which define an annular passage there between.

### SUMMARY OF THE INVENTION

With regard to the plug assembly of the Japanese Patent No.4203912, a large pour spout is provided on the plug body for the purpose of improving the pourability, and the pour spout itself is covered by the lid. However, since the pour spout is extended in an upward direction, a compactness of this plug assembly is hindered.

Further, with regard to the plug assembly of JP-A-Hei 10-75902, the discharge outlet is provided on the shoulder member for the purpose of improving the pourability. First of all, since this plug assembly requires the shoulder member, the number of the parts used increases. Further, since a given length of the flow passage needs to be secured to improve the pourability, the pour spout is constantly exposed outside, thereby resulting in an unsanitary condition as compared to those coverable by a lid, and making it easy for the pour spout to be damaged by a drop impact or the like. Furthermore, although the flow passage provided is formed by partially cutting out a screw portion of the plug body, the current in the flow passage easily stretches out in the left and right directions. Further, since the screw portion is cut out, the plug body wobbles significantly in the direction of the flow passage.

Furthermore, with regard to the plug assembly of JP-A-Hei 8-71005, the flow passage is provided between the inner plug and the outer plug, and is opened or closed as the valve body is operated. However, since the inner region of the flow passage is configured in a complex manner, dirt can easily accumulate therein. In addition, since the plug assembly of the JP-A-Hei 8-71005 employs a large number of parts, an inferior washability is resulted.

It is an object of the present invention to provide a plug assembly for a beverage container, exhibiting a favorable pourability without hindering a compactness of the product.

The invention of a first aspect is a plug assembly for a beverage container, including: an outer plug fitted into an upper opening section of a beverage container body, the outer plug having an outflow passage formed therein; an inner plug fitted into an upper opening section of the outer plug; an inner screw having a thread continuously provided on an inner circumferential surface of the outer plug, the inner screw allowing the inner plug to be screwed into the outer plug; an outer screw having a thread provided on an outer circumferential surface of the inner plug, the outer screw corresponding to the inner screw; a flow passage provided on the inner plug, the flow passage being formed by vertically cutting out at least a part of the thread of the outer screw; and a flow passage control wall provided on an upper portion of the flow passage, the flow passage control wall slanting upward and outward.

The inner plug further includes a flow passage control side wall provided on an upper side region adjacent to the flow passage, the flow passage control side wall being formed continuous in a vertical direction. According to the invention of a second aspect, the inner plug includes a screw stopper wall; the outer plug includes a screw stopper portion corresponding to the screw stopper wall; and the flow passage is opened before the inner plug has been rotated half round from a flow passage-closed state in which the screw stopper wall and the screw stopper portion abut against each other.

According to the inventions of a third aspect, the outer plug includes a small protrusion formed on an entire circumference of an upper end surface of the outflow passage.

According to the inventions of a fourth aspect, the small protrusion has a substantially rectangular cross-sectional shape exhibiting a height of not smaller than 1.0 mm and a width of not larger than 2.2 mm.

According to the inventions of a fifth aspect, the inner screw and the outer screw are double-thread screws.

According to the invention as set forth in the first aspect, since the inner screw of the outer plug is formed in a continuous manner, not only a stable screwed state can be consistently maintained regardless of the locations of the flow passages of the inner plug, but a stable pourability is achieved due to the flow passage control walls formed on the upper regions of the flow passages.

Further, it is difficult to thread the metal container and directly screw the plug assembly thereto, since limitations are imposed on the height and pitch of the screw when performing threading. Here, an engagement strength may decrease due to the fact that the inner plug has the flow passages. However, since the thread of the inner screw is continuously provided on the outer plug made of a synthetic resin, the inner plug can be rigidly engaged therewith.

According to the invention as set forth in the second aspect, the flow passages will be opened before the inner plug has been rotated half round, thus resulting in an easy operation. Moreover, it is difficult to thread the metal container and directly screw the plug assembly thereto. Particularly, due to the work-hardening of the metal, the threading of the metal container is even more difficult if employing a multiple thread screw such as a double-thread screw. Here, by employing the outer plug made of a synthetic resin, an easy operation is possible without lowering the productivity, even when employing a multiple thread screw.

According to the inventions as set forth in the third aspect, although the plug assembly may wobble in the radial direction due to the fact that the flow passages of the inner plug are formed as a partial cut-out, the plug assembly can be restricted from wobbling by the flow passage control side walls provided on the side regions of the flow passages. The flow passage control side walls also allow a pourability to be further stabilized.

According to the inventions as set forth in the fourth aspect, a liquid drainability at the time of pouring a liquid is improved by providing the small protrusion on the upper end region of the outflow passage.

According to the inventions as set forth in the fifth aspect, the results of the experiments indicate that the height and width of the cross-sectional shape of the small protrusion are preferably within the aforementioned range. That is, an unfavorable liquid drainability was observed in each case, when the height of the small protrusion was smaller than 1 mm regardless of the dimension of the width. Meanwhile, an unfavorable liquid drainability was also observed when the height of the small protrusion was not smaller than 1 mm, provided that the width of the small protrusion was greater than 2.2 mm.

### BRIEF DESCRIPTION OF THE DRAWINGS

FIG.1 is a first overall cross-sectional diagram of a first embodiment of the present invention, in which a flow passage is shown in a cross-sectional view.
FIG.2 is an enlarged cross-sectional diagram of the first embodiment of the present invention, in which the flow passage is also shown in a cross-sectional view.
FIG.3 is a second overall cross-sectional diagram of the first embodiment of the present invention.
FIG.4 is an overall front view of the first embodiment of the present invention.
FIG.5 is a perspective view of an inner plug of the first embodiment of the present invention.
FIG.6 is a perspective view of a plug assembly of the first embodiment of the present invention.
FIG.7 is an exploded perspective view of the plug assembly of the first embodiment of the present invention.
FIG.8 is a perspective view of an outer plug of the first embodiment of the present invention, in which a part of the outer plug is shown in a cross-sectional view.
FIG.9 is a cross-sectional explanatory view of the inner plug of the first embodiment of the present invention.

### DETAILED DESCRIPTION OF THE INVENTION

Preferred embodiments of the present invention are described with reference to the accompanying drawings. However, the embodiments introduced hereunder shall not limit the contents of the present invention that are described in the scope of the claims. Further, not all elements shown hereunder are necessarily the essential elements of the present invention.

### (First embodiment)

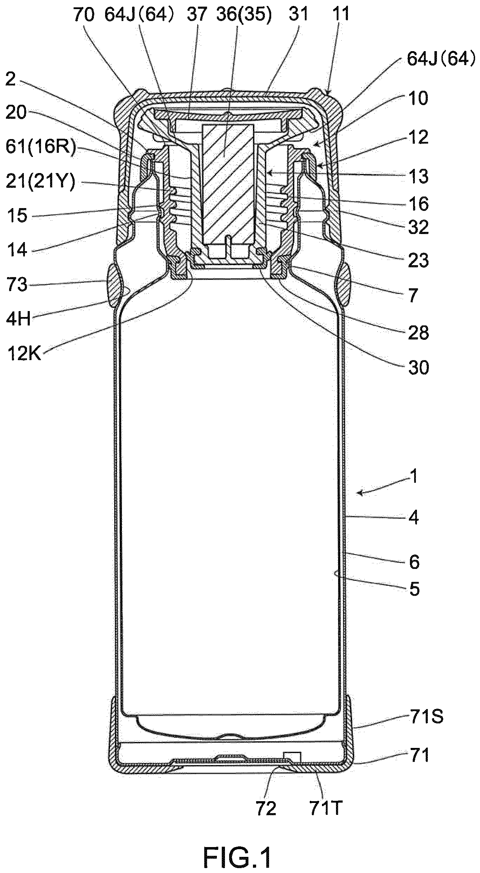

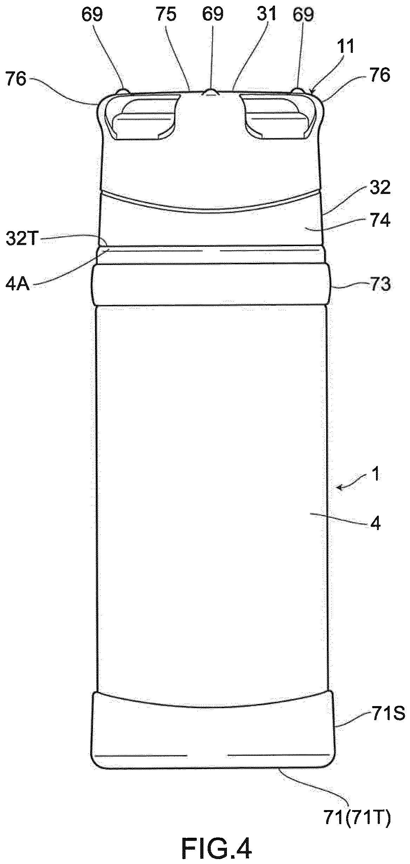

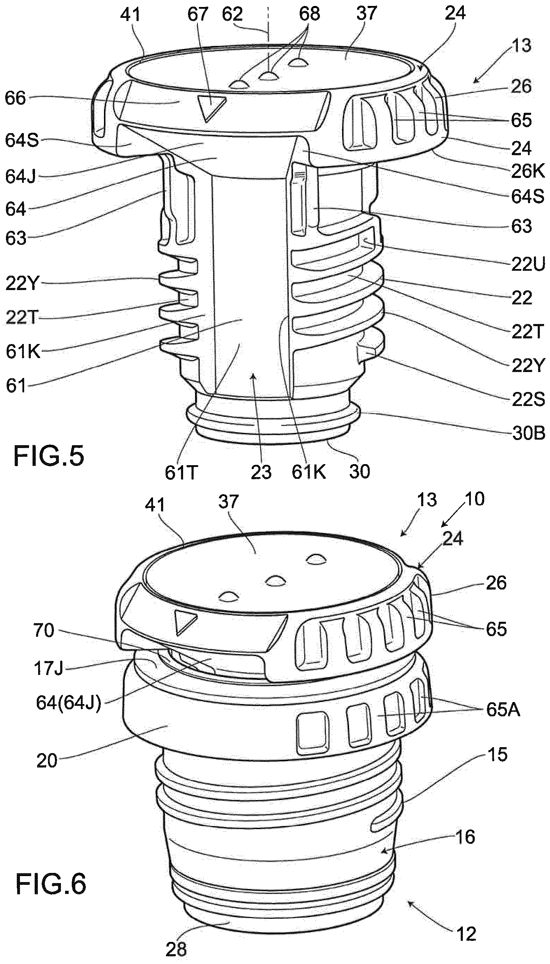

FIG.1 to FIG.9 show a first embodiment. A plug assembly 10 is detachably provided on a wide-mouthed upper opening section 2 of a beverage container body 1 that serves as a container and is made of either a metal or a resin. The beverage container body 1 is composed of a bottomed stainless-steel outer cylinder 4 and a bottomed stainless-steel inner cylinder 5 that is disposed inside the outer cylinder 4. Here, the upper opening section 2 is formed by joining together the upper edges of the outer cylinder 4 and the inner cylinder 5, and a vacuum layer 6 serving as a heat-insulating layer is formed between the outer cylinder 4 and the inner cylinder 5. Thus, the beverage container body 1 is configured as a heat-insulating double-layered container. Further, an inward protrusion 7 is formed, in a stepwise manner, in a region of the inner cylinder 5 that is slightly below the upper opening section 2.

The plug assembly 10 that is made of a synthetic resin is detachably fitted into the upper opening section 2 of the beverage container body 1 made of a metal. Further, a lid 11 covering the upper opening section 2 is detachably provided thereon. Particularly, this lid 11 is used as a cup.

The plug assembly 10 includes: a substantially cylindrical outer plug 12 to be detachably screwed to an inner region of the upper opening section 2; and a bottomed inner plug 13 to be detachably screwed to an inner region of this outer plug 12. Both the outer plug 12 and the inner plug 13 are made of a synthetic resin, and the inner plug 13 is actually to be screwed to an upper opening section 12J of the outer plug 12.

A female screw portion 14 is formed on an area of the inner circumferential surface of the metal inner cylinder 5 that is close to the upper opening section 2. The outer plug 12 includes an outer cylindrical portion 16 having a male screw portion 15 that is to be screwed to the female screw portion 14. This outer cylindrical portion 16 is formed into a cylindrical shape. Here, a bulging thick-walled part 17 is formed on the upper end outer surface of the outer cylindrical portion 16, and a concave portion 18 serving as an engagement receiving portion is circumferentially provided on the outer surface of the thick-walled part 17. Further, a convex portion 19 serving as an engagement portion is formed on an outer plug ring 20 serving as a shoulder member. The outer plug ring 20 is integrally coupled with the outer cylindrical portion 16 by forcibly engaging the convex portion 19 with the concave portion 18. In addition, the outer cylindrical portion 16 is formed into a cylindrical shape with the upper and lower sections thereof opened, and formed inside the outer cylindrical portion 16 is an outflow passage 16R vertically passing therethrough. In this way, the outer plug 12 is composed of the outer cylindrical portion 16 and the outer plug ring 20.

When the outer plug 12 is attached to the upper opening section 2, the outer plug ring 20 serves to cover the upper end of the upper opening section 2. Further, provided on the inner circumferential surface of the outer cylindrical portion 16 is a female screw portion 21 having a thread continuously formed in a helical direction. This female screw portion 21 serves as an inner screw.

The inner plug 13 integrally includes: an inner cylindrical portion 23 serving as an inner plug body having a male screw portion 22 to be screwed to the female screw portion 21; and an inner plug lid 24 provided on the upper region. The lower end of the inner cylindrical portion 23 is sealed by a bottom plate portion 23T, and the male screw portion 22 serves as an outer screw. Particularly, provided on the upper portion of the inner plug lid 24 is an outer plug maneuver portion 26 formed into the shape of an outer flange. More particularly, the diameter of the outer circumference the inner plug lid 24 is substantially identical to that of the outer plug ring 20.

Further, a protruding outer packing-attachment portion 27 is provided on the lower section of the outer cylindrical portion 16. Attached to this outer packing-attachment portion 27 is an outer water stop packing 28 made of an elastic material such as a rubber e.g. silicone rubber, an elastomer or the like. Here, once the outer plug 12 has been screwed to the inner side of the upper opening section 2, the outer water stop packing 28 will abut against the protrusion 7 such that the gap between the outer plug 12 and the inner cylinder 5 is sealed.

Moreover, a protruding inner packing-attachment portion 29 is provided on the lower section of the inner cylindrical portion 23. Attached to this inner packing-attachment portion 29 is an inner water stop packing 30. Once the inner plug 13 has been screwed to the inner side of the outer plug 12, the inner water stop packing 30 will abut against the lower inner circumference of the outer plug 12 such that a lower opening section 12K of the outer plug 12 is sealed by the inner plug 13.

The cross-section of the inner water stop packing 30 is substantially formed into the shape of a toppled "U." An inner concave portion 30A of the inner water stop packing 30 is tightly fitted onto a protrusion 29A of the inner packing-attachment portion 29. In this way, the inner water stop packing 30 is positioned to the inner packing-attachment portion 29 and prevented from being disengaged therefrom. Further, circumferentially formed on the outer circumferential surface of the inner water stop packing 30 is a curved convex portion 30B tightly abutting against the lower inner circumferential surface of the outer cylindrical portion 16. Furthermore, formed on the lower surface inner circumference of the inner water stop packing 30 is a tab portion (not shown) protruding inward. The inner water stop packing 30 is capable of being removed from the inner packing-attachment portion 29 by holding such tab portion.

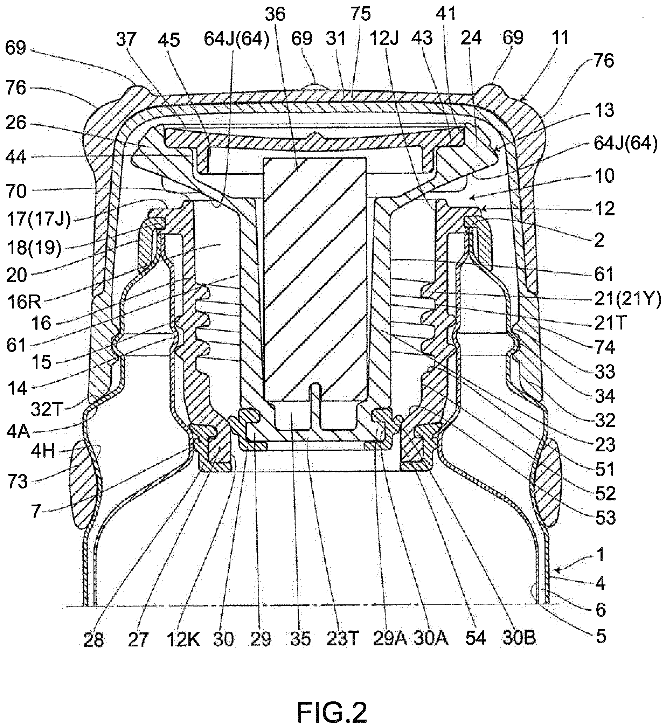

The lid 11 integrally includes: an upper surface portion 31; and a side surface portion 32 vertically extended downward from the circumference of the upper surface portion 31. Further, a female screw portion 33 is formed on the lower inner circumference of this side surface portion 32. This female screw portion 33 is to be screwed together with a male screw portion 34 provided on the upper portion of the outer cylinder 4. In addition, as shown in FIG.2, the male screw portion 34 is screwed together with the female screw portion 33, and a lower end 32T of the side surface portion 32 abuts against an upward step portion 4A of the outer cylinder 4, thus establishing a state where the lid 11 is completely closed.

Further, the inner region of the inner plug 13 is configured as a storage space 35 for stowing a heat-insulating material 36. Furthermore, a decorative plate 37 is provided on the top surface of the inner plug 13.

A step portion 41 having a concaved central region is formed on the outer circumferential region of the upper surface of the outer plug maneuver portion 26. There, formed on the inner side of this step portion 41 is a mounting portion 43 that is provided a step below the upper surface of the outer plug maneuver portion 26.

Particularly, this mounting portion 43 is formed on the entire circumference thereof. Moreover, an inner step portion 44 is formed inside the mounting portion 43 in a substantially vertical manner. In addition, formed on the lower surface of the decorative plate 37 is a cylindrical inner engagement portion 45 engageable with the inner circumferential surface of the inner step portion 44.

The decorative plate 37 is substantially formed into the shape of a flat panel. In this embodiment and as shown in FIG.2, the under surface of the decorative plate 37 is flat and substantially horizontal in a region outside the inner engagement portion 45, whereas the upper surface of the decorative plate 37 is so tapered that the central area thereof is formed slightly lower than the outer circumferential area thereof. In fact, the decorative plate 37 may be manufactured with a material of a color different from that of the outer cylindrical portion 16; or, for example, be painted for the purpose of decoration.

Further, a procedure for joining the decorative plate 37 to the inner cylindrical portion 23, is performed as follows. That is, a loop-shaped metal part (not shown) made of a magnetic material is to be sandwiched between the upper surface of the mounting portion 43 and the under surface of the decorative plate 37, and the inner engagement portion 45 of the decorative plate 37 engages with the inner circumferential surface of the inner step portion 44. After installing the metal part and the decorative plate 37 in the outer cylindrical portion 16 in such manner, the metal part is then heated through electromagnetic induction heating such that the under surface of the decorative plate 37 and the mounting portion 43 that are in contact with the metal part are allowed to be welded to each other.

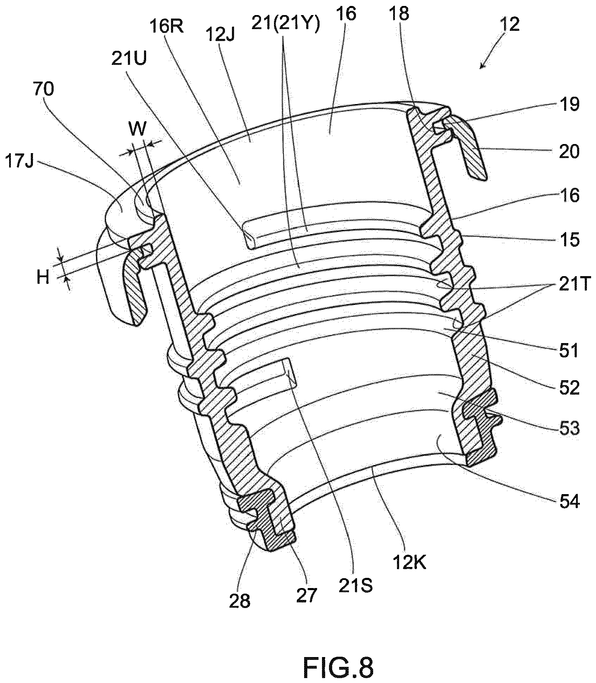

As shown in FIG.8, an upward slanted step portion 51 as a part of the inner screw is provided on the inner circumferential surface of the lower region of the outer cylindrical portion 16. Further provided is a thick-walled portion 52 formed by thickening the under portion of the upward slanted step portion 51 inward. Furthermore, provided below the thick-walled portion 52 is a shrunk portion 53 as a step portion shrunk downward. Furthermore, provided below this shrunk portion 53 is a small-diameter inner circumferential surface 54 whose diameter is formed smaller than that of the inner circumferential surface of the thick-walled portion 52. Here, the diameter of the inner circumferential surface of the thick-walled portion 52 is substantially identical to the diameter between the protruding edges of thread ridges 21Y.

The curved convex portion 30B of the inner water stop packing 30 presses against the small-diameter inner circumferential surface 54, thus allowing the lower opening section 12K of the outer plug 12 to be sealed by the inner plug 13. Further, both the female screw portion 21 and the male screw portion 22 are configured as double-thread screws with large movements of rotation, and the water is stopped by allowing the inner water stop packing 30 to press against the small-diameter inner circumferential surface 54 whose diameter is smaller than that of an upper region thereof. Thus, in this embodiment, as a result of rotating the outer plug 12 in an opening direction half round from the state where the lower opening section 12K is sealed, the lower opening section 12K will open as the inner water stop packing 30 disengages from the small-diameter inner circumferential surface 54, thereby making it possible to pour the beverage in the container body 1. Moreover, the female screw portion 21 and the male screw portion 22 may also be configured as triple-thread screws depending on a maneuvering feeling and/or diameters.

As shown in FIG.8, the female screw portion 21 of the outer plug 12 includes: the thread ridges 21Y protruding inward; and valley sections 21T formed between the thread ridges 21Y. Here, an upper end (one end in the rotational direction) of the thread ridges 21Y is configured as a first screw stopper portion 21U. Further, the region below the valley sections 21T is formed as the thick-walled portion 52, and a lower end (the other end in the rotational direction) of the valley sections 21T is configured as a second screw stopper portion 21S. Particularly, the upward slanted step portion 51 is composed of a slanted surface of one of the valley sections 21T. Further, since the female screw portion 21 is a double-thread screw, the first and second screw stopper portions 21U and 21S are respectively formed at locations opposite to each other in the circumferential direction. That is, the screw stopper portions 21U and 21S are formed in a direction intersecting with the helical direction of the female screw portion 21.

The male screw portion 22 of the inner plug 13 includes: thread ridges 22Y protruding outward; and valley sections 22T formed between the thread ridges 22Y. Further, provided on the front and back sides of the outer circumference of the inner cylindrical portion 23 is a flow passage 61 formed as a vertical concave portion obtained by cutting out the male screw portion 22. This flow passage 61 includes: a bottom portion 61T; and a left and right wall portions 61K, 61K. Particularly, the bottom portion 61T is an arc-like surface formed around a central axis 62 of the inner cylindrical portion 23, and the diameter of the bottom portion 61T is smaller than that of the inner cylindrical portion 23. Further, each wall portion 61K is formed in the radial direction around the central axis 62.

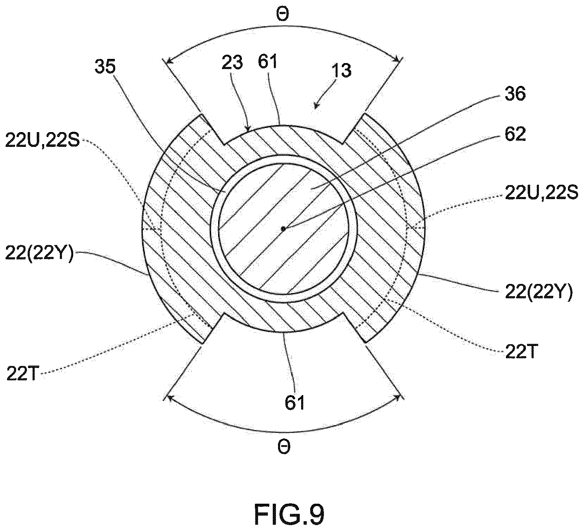

Provided on an upper end (one end in the rotational direction) of the valley sections 22T of the male screw portion 22 is a first screw stopper wall 22U formed in a direction intersecting with the rotational direction. The first screw stopper wall 22U allows the first screw stopper portion 21U to engage therewith. Moreover, a lower end (the other end in the rotational direction) of the thread ridges 22Y of the male screw portion 22 is configured as a second screw stopper wall 22S. The second screw stopper wall 22S allows the second screw stopper portion 21S to engage therewith. Particularly, as illustrated in FIG.9, each of the flow passages 61, 61 formed on the front and back sides is configured, in the circumferential direction, within a range of an angle θ of about 70 degrees. More particularly, the front and back flow passages 61, 61 are formed apart from each other by 110 degrees in the circumferential direction. Here, in view of volume of flow, the aforementioned angle may be 90 to 50 degrees.

A flow passage control side wall 63 is provided between the uppermost valley section 22T of the male screw portion 22 and an under surface 26K of the outer plug maneuver portion 26. Specifically, this flow passage control side wall 63 is formed on both sides of each flow passage 61 in the left and right directions. More specifically, with the inner plug 13 being screwed together with the outer plug 12, the front ends of the flow passage control side walls 63 are positioned in the vicinity of the inner circumferential surface of the outer cylindrical portion 16. Here, the front ends of the flow passage control side walls 63 are substantially located in the same positions as those of the front ends of the thread ridges 22Y. Further, the upper ends of the flow passage control side walls 63 are joined to the under surface 26K, whereas the lower ends thereof are joined to the uppermost thread ridges 22Y.

In this way, since the flow passage control side walls 63 are provided in the upper region of the inner cylindrical portion 23 where no male screw portion 22 is formed, the flow passage control side walls 63 serve as spacers such that the inner plug 13 can be restricted from wobbling against the outer plug 12 in the radial direction. Further, since the flow passage control side wall 63 is provided on both sides of each flow passage 61, a fluid flowing through the flow passage 61 can be guided to an upper surface portion 64J without spreading in the left and right directions.

The under surface 26K of the outer plug maneuver portion 26 is substantially horizontal and flat. Formed on the under surface 26K are side flow passages 64 that are concaved upward and communicated with the upper regions of the flow passages 61. Each side flow passage 64 is configured as follows. That is, the upper surface portion 64J thereof is slanted upward and outward in a manner such that the side flow passage 64 is formed larger outward in the vertical direction. There, a left and right side surface portions 64S, 64S of each side flow passage 64 is formed in the radial direction around the central axis 62. Further, the upper surface portion 64J is configured as a flow passage control wall intersecting with the flow passage 61. Particularly, the upper surface portion 64J is linearly slanted, and an inclined angle thereof is smaller than 40 degrees to the horizontal.

Further, other than the regions corresponding to the side flow passages 64, provided on the side surface of the outer plug maneuver portion 26 are vertical concave-convex sections 65 that are aligned in the circumferential direction. Here, slanted surfaces 66 are formed in the regions of the side surface of the outer plug maneuver portion 26 that correspond to the side flow passages 64. Each slanted surface 66 is slanted outward from top down. Further, provided on each slanted surface 66 is a symbol 67 indicating the location of the side flow passage 64. In this embodiment, the symbol 67 is configured as a triangle protrusion. Furthermore, provided on the upper surface of the decorative plate 37 are symbols 68 that are aligned between the slanted surfaces 66, 66 on both sides. Each symbol 68 is substantially configured as a hemisphere face-shaped protrusion. In this embodiment, there are provided three symbols 68 that are individually aligned in the center, the front and back regions.

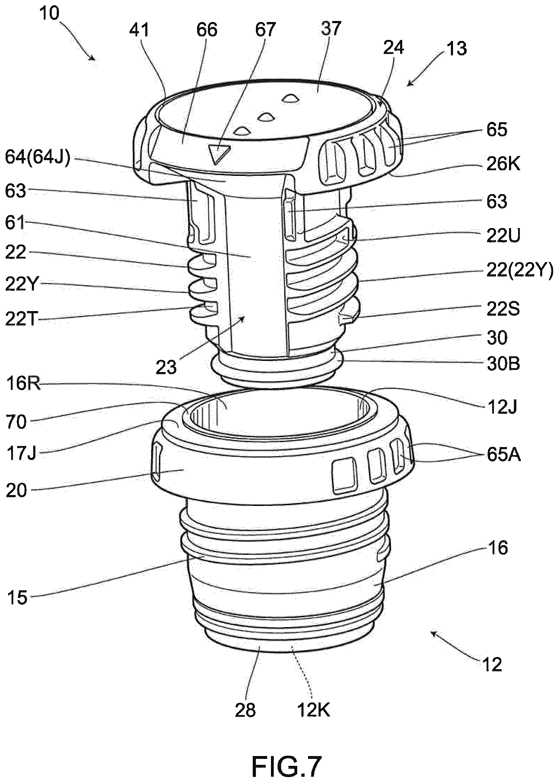

As shown in FIG.7, provided on the outer circumference of the outer plug ring 20 are vertical concave-convex sections 65A that correspond to the concave-convex sections 65 and are aligned in the circumferential direction. With the inner plug 13 closing the outflow passage 16R of the outer plug 12, the concave-convex sections 65 and the concave-convex sections 65A are positioned to each other.

As shown in FIG.2, an upper surface 17J of the thick-walled part 17 that is the upper surface of the outer plug 12 is formed flat and substantially horizontal. A small protrusion 70 is formed on the entire inner circumference of the upper surface 17J. This small protrusion 70 is located on the upper end surface of the upper opening section 12J, and the inner circumference of the small protrusion 70 is continuous with the outflow passage 16R .

The shape of a cross-sectional surface of the small protrusion 70 is substantially rectangular. Here, a preferable range of a height H and a width W of the small protrusion 70 was obtained through experiments that were performed as follows. In the beginning, the outer plug 12 was screwed to the container body 1 without the inner plug 13 being attached thereto, followed by tilting the container body 1 thus assembled to pour out a liquid contained therein. Specifically, tap water of a normal temperature (15 to 25°C) was used as the liquid. The results of the experiments are shown in the following Table 1

**(Table 1)**

| | | Width of cross-section of small protrusion | | | | |
|---|---|---|---|---|---|---|
| | | 1.2mm | 1.7mm | 2.2mm | 2.7mm | 3.2mm |
| Height of cross-section of small protrusion | 1.5mm | ○ | ○ | ○ | × | × |
| | 1.0mm | ○ | ○ | ○ | × | × |
| | 0.5mm | × | × | × | × | × |

| | | | | | | |
|---|---|---|---|---|---|---|
| ○: Favorable pourability, ×: Unfavorable pourability (Unfavorable liquid drainability) | | | | | | |

As shown in Table 1, an unfavorable liquid drainability was observed when the height of the small protrusion 70 was less than 1 mm (0.5 mm in the experiments) regardless of the dimension of the width W. Further, as for a small protrusion having a height H of not smaller than 1 mm, an unfavorable liquid drainability was also observed when the width of the protrusion was larger than 2.2 mm (2.7 mm in the experiments), where the liquid could possibly reach the upper surface 17J at times. Based on the results of these experiments, it was understood that a preferred height H of the cross-sectional shape of the small protrusion 70 was not smaller than 1.0 mm, and that a preferred width W thereof was not larger than 2.2 mm.

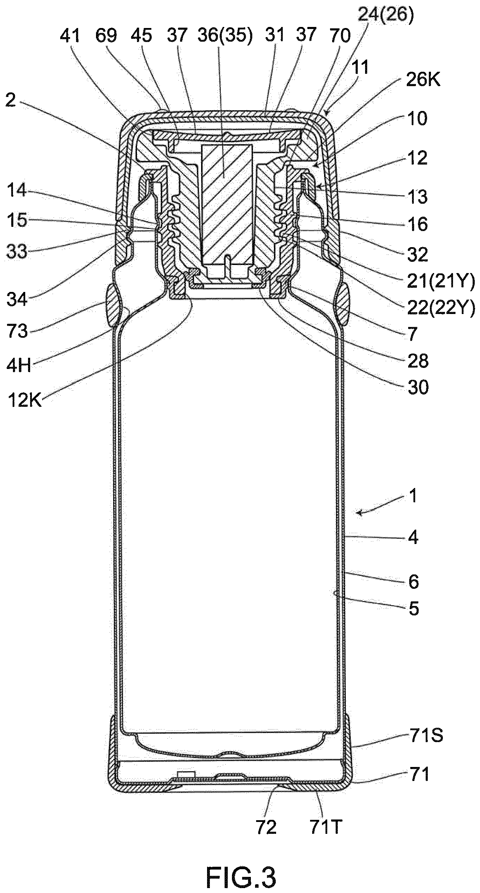

Further, as shown in FIG.3, a slight clearance is formed between the inner plug lid 24 and the small protrusion 70, with the outflow passage 16R being closed by screwing the inner plug 13 to the outer plug 12. There, since the inner plug lid 24 serves to cover the upper surface 17J of the outer plug 12 and has a diameter larger than that of the thick-walled part 17, dust is prevented from entering the outflow passage 16R from above.

As shown in FIG.1 and FIG.3, provided on the bottom portion of the container body 1 is a bottom cover 71 for protecting the corresponding bottom portion. This bottom cover 71 is made of an elastic member such as a silicon member or the like. Particularly, the bottom cover 71 integrally includes: an opening section 72 formed in the central region thereof; a bottom section 71T for covering the bottom portion of the container body 1; and a side surface portion 71S that is cylindrically erected from the circumferential region of the bottom section 71T and serves to cover the lower side portion of the container body 1.

Further, the outer cylinder 4 includes a concave portion 4H that is circumferentially provided below the upward step portion 4A, but is substantially located at the same height as the aforementioned protrusion 7. Here, a torso ring 73 is attached to this concave portion 4H. This torso ring 73 is made of an elastic member such as a silicon member or the like. Specifically, the outer surface of the torso ring 73 is formed as a curved surface, and the outer surface side of this torso ring 73 is located outward and beyond the outer circumferential surface of the vertical outer cylinder 4.

The lid 11 is a two-color molded product obtained by integrally molding together a lid body 74 and an outer surface member 75 provided on the outer surface of the lid body 74. This outer surface member 75 serves to cover the upper surface portion 31 and the upper portion of the side surface portion 32. Further, provided on the outer surface member 75 are bulging portions 76 facing each other at the boundary between the upper surface portion 31 and the side surface portion 32. Each bulging portion 76 serves as a slip-proof portion when the lid 11 is being gripped. Moreover, each bulging portion 76 is provided with a protrusion 69 serving as a grounding leg portion when the lid 11 is being used as a cup.

Described hereunder are the functions brought about by the aforementioned structure. The lid 11 can be removed from the container body 1, followed by removing the plug assembly 10 from the upper opening section 2 and then disassembling the plug assembly 10 into the outer plug 12 and the inner plug 13, thereby allowing each part to be washed. Further, a beverage can be poured into the container body 1, followed by sealing the upper opening section 2 with the plug assembly 10 and then attaching the lid 11 thereto. In this way, not only the beverage is allowed to be carried around, but the vacuum layer 6 of the container body 1 and the heat-insulating material 36 of the plug assembly 10 allow the beverage inside the container body 1 to be kept hot or cold. Particularly, the outer plug 12 can be screwed to the upper opening section 2 with an effortless force, by gripping the outer plug ring 20 having a relatively large diameter.

The lid 11, once removed, can be used as a cup to drink the beverage. Specifically, even after the lid 11 has been removed, since the upper region of the outflow passage 16R is covered by the inner plug lid 24, dust can be prevented from entering the outflow passage 16R .

Further, as a result of rotating the outer plug 12 in the opening direction substantially half round by gripping the outer plug maneuver portion 26, the water stop packing 30 will rise and then disengage from the small-diameter inner circumferential surface 54, thus causing the lower opening section 12K to be opened. Furthermore, by gripping the container body 1 to tilt the same, the beverage contained therein is allowed to be poured through the flow passages 61 and the side flow passages 64.

At that time, the beverage in the container body 1 flows out in the following manner. That is, the momentum of the current of the beverage will weaken when the beverage has collided against the female screw portion 21 in each vertical flow passage 61. The beverage is then allowed to flow stably as a result of being guided by the upper surface portion 64J of each side flow passage 64, before being poured out in a given direction.

In this way, in the present embodiment and as described in claim 1, provided is a plug assembly for a beverage container. Particularly, this plug assembly is to be fitted into the upper opening section 2 of the beverage container body 1, and includes: the outer plug 12 having the outflow passage 16R formed therein; and the inner plug 13 to be fitted into the upper opening section 12J of the outer plug 12. More particularly, provided on the inner circumferential surface of the outer plug 12 is the female screw portion 21 as a helical inner screw having a thread continuously formed in the radial direction and allows the inner plug 13 to be attached thereto. Meanwhile, provided on the outer circumferential surface of the inner plug 13 is the male screw portion 22 serving as an outer screw and corresponding to the female screw portion 21. Particularly, the thread of the male screw portion 22 as the outer screw is formed on the outer circumferential surface of the inner plug 13. The plug assembly further includes: the flow passages 61 formed by cutting out at least a part of the thread of the male screw portion 22 in the vertical direction; and the outward and upward slanting upper surface portions 64J that serve as flow passage control walls and are formed on the upper regions of the flow passages 61 of the inner plug 13. Here, since the inner screw of the outer plug 12 is provided in the continuous manner, a stable screwed state can be constantly maintained regardless of the locations of the flow passages 61 of the inner plug 13, and a stable pourability can be achieved due to the upper surface portions 64J formed on the upper regions of the flow passages 61.

Further, it is difficult to thread the container body 1 as a metal container and directly screw the plug assembly thereto, since limitations are imposed on the height and pitch of the screw when performing threading. Here, an engagement strength may decrease due to the fact that the inner plug 13 has the flow passages 61. However, since the thread of the female screw portion 21 is continuously provided on the outer plug 12 made of a synthetic resin, the inner plug 13 can be rigidly engaged therewith.

Furthermore, in the present embodiment and as described in claim 2, also provided on the outer plug 12 are the first and second screw stopper portions 21U, 21S, whereas formed on the inner plug 13 are the screw stopper walls 22U, 22S corresponding to the screw stopper portions 21U, 21S. Furthermore, the flow passages 61 will be opened before the inner plug 13 has been rotated half round from a flow passage-closed state where the screw stopper portions 21U, 21S and the screw stopper walls 22U, 22S abut against one another, thus resulting in an easy operation. Moreover, it is difficult to thread the metal container and directly screw the plug assembly thereto. Particularly, due to the work-hardening of the metal, the threading of the metal container is even more difficult if employing a multiple thread screw such as a double-thread screw. Here, by employing the outer plug 12 made of a synthetic resin, an easy operation is possible without lowering the productivity, even when employing a multiple thread screw.

Furthermore, in the present embodiment and as described in claim 3, provided on upper side regions adjacent to the flow passages 61 of the inner plug 13 are the flow passage control side walls 63 that are continuous, in the vertical direction, with the male screw portion 22 as an outer screw. Furthermore, provided on the inner plug 13 are the flow passages 61 that are partially cut out. For these reasons, wobbling in the radial direction along the flow passages can be restricted. Moreover, the flow passage control side walls 63 provided on the side portions of the flow passages serve to guide the current of a fluid, thus allowing the pourability to become even more stable.

Furthermore, in the present embodiment and as described in claim 4, the small protrusion 70 is formed on the entire circumference of the upper end surface of the outflow passage 16R of the outer plug 12, thus improving the liquid drainability at the time of pouring the liquid.

Furthermore, in the present embodiment and as described in claim 5, the results of the experiments indicate that the height H of the substantially rectangular cross-sectional shape of the small protrusion 70 is preferably not smaller than 1.0 mm, provided that the width W thereof is not larger than 2.2 mm. That is, an unfavorable liquid drainability was observed in each case, when the height H of the small protrusion 70 was smaller than 1 mm (0.5 mm in the experiments) regardless of the dimension of the width W. Meanwhile, an unfavorable liquid drainability was also observed when the height H of the small protrusion 70 was not smaller than 1 mm, provided that the width W of the small protrusion 70 was greater than 2.2 mm (2.7 mm in the experiments).

The effects of the aforementioned embodiment are as follows. That is, since both the female screw portion 21 and the male screw portion 22 are double-thread screws exhibiting large movements of rotation, the volume by which the inner plug 13 is rotated can be reduced when opening the lower opening section 12K. Further, provided on the lower inner circumferential region of the outer cylindrical portion 16 is the downward shrinking shrunk portion 53 that is located between the inner circumferential surface of the thick-walled portion 52 and the small-diameter inner circumferential surface 54. Therefore, the inner water stop packing 30, when descending, is capable of smoothly abutting against the small-diameter inner circumferential surface 54. Moreover, one curved convex portion 30B of the inner water stop packing 30 abuts against the small-diameter inner circumferential surface 54, thereby making it possible to seal or unseal the lower opening section 12K with a small movement of the inner plug 13.

However, the present invention is not limited to the aforementioned embodiment. In fact, various modified embodiments are possible within the scope of the invention. For example, although the aforementioned embodiment employs the flow passages provided on both the front and back sides of the inner plug, the flow passage may be formed in only one location.

## Claims

1. A plug assembly for a beverage container, **characterized in** comprising:
an outer plug (12) fitted into an upper opening section (2) of a beverage container body (1), said outer plug (12) having an outflow passage (16R) formed therein;
an inner plug (13) fitted into an upper opening section (12J) of said outer plug (12);
an inner screw (21) having a thread continuously provided on an inner circumferential surface of said outer plug (12), said inner screw (21) allowing said inner plug (13) to be screwed into said outer plug (12);
an outer screw (22) having a thread provided on an outer circumferential surface of said inner plug (13), said outer screw (22) corresponding to said inner screw (21);
a flow passage (61) provided on said inner plug (13), said flow passage (61) being formed by vertically cutting out at least a part of the thread of said outer screw (22); and
a flow passage control wall (64J) provided on an upper portion of said flow passage (61), said flow passage control wall (64J) slanting upward and outward,
**characterized in that** said inner plug (13) includes a flow passage control side wall (63) provided on an upper side region adjacent to said flow passage (61), said flow passage control side wall (63) being formed continuous in a vertical direction.

2. The plug assembly for the beverage container according to claim 1, **characterized in that** said inner plug (13) includes a screw stopper wall (21U, 21S); said outer plug (12) includes a screw stopper portion (22U, 22S) corresponding to said screw stopper wall (22U, 22S); and said flow passage (61) is opened before said inner plug (13) has been rotated half round from a flow passage-closed state in which said screw stopper wall (22U, 22S) and said screw stopper portion (21U, 21S) abut against each other.

3. The plug assembly for the beverage container according to claim 1 or claim 2, **characterized in that** said outer plug (12) includes a small protrusion (70) formed on an entire circumference of an upper end surface of said outflow passage (16R).

4. The plug assembly for the beverage container according to claim 3, **characterized in that** said small protrusion (70) has a substantially rectangular cross-sectional shape exhibiting a height of not smaller than 1.0 mm and a width of not larger than 2.2 mm.

5. The plug assembly for the beverage container according to any one of claims 1 to 4, **characterized in that** said inner screw (21) and said outer screw (22) are double-thread screws.

## Patentansprüche

1. Verschluss für einen Getränkebehälter, **dadurch gekennzeichnet, dass** er folgendes aufweist:
einen Außenverschluss (12), der in eine obere Öffnungssektion (2) eines Getränkebehälterkörpers (1) gepasst ist, wobei der Außenverschluss (12) einen Ausflussdurchgang (16R) darin ausgebildet aufweist;
einen Innenverschluss (13), der in eine obere Öffnungssektion (12J) des Außenverschlusses (12) gepasst ist;
eine Innenschraube (21) mit einem Gewinde, das fortlaufend auf einer Innenumfangsseite des Außenverschlusses (12) vorgesehen ist, wobei die Innenschraube (21) ermöglicht, dass der Innenverschluss (13) in den Außenverschluss (12) geschraubt wird;
eine Außenschraube (22) mit einem Gewinde, das fortlaufend auf einer Außenumfangsseite des Innenverschlusses (13) vorgesehen ist, wobei die Außenschraube (22) der Innenschraube (21) entspricht;
einen Flussdurchgang (61), der am Innenverschluss (13) vorgesehen ist, wobei der Flussdurchgang (61) durch vertikales Ausschneiden von mindestens einem Teil des Gewindes der Außenschraube (22) ausgebildet ist; und
eine Flussdurchgangssteuerwand (64J), die an einem oberen Abschnitt des Flussdurchgangs (61) vorgesehen ist, wobei die Flussdurchgangssteuerwand (64J) schräg nach oben und nach außen verläuft,
**dadurch gekennzeichnet, dass** der Innenverschluss (13) eine Flussdurchgangssteuerseitenwand (63) enthält, die an einer Oberseitenregion dem Flussdurchgang (61) benachbart vorgesehen ist, wobei die Flussdurchgangssteuerseitenwand (63) fortlaufend in einer vertikalen Richtung ausgebildet ist.

2. Verschluss für den Getränkebehälter nach Anspruch 1, **dadurch gekennzeichnet, dass** der Innenverschluss (13) eine Schraubenanschlagwand (21U, 21S) enthält, der Außenverschluss (12) einen Schraubenanschlagabschnitt (22U, 22S) enthält, der der Schraubenanschlagwand (22U, 22S) entspricht, und der Flussdurchgang (61) geöffnet ist, bevor der Innenverschluss (13) aus einem geschlossenen Flussdurchgangszustand, in dem die Schraubenanschlagwand (22U, 22S) und der Schraubenanschlagabschnitt (21U, 21S) aneinander anstoßen, halb herumgedreht wurde.

3. Verschluss für den Getränkebehälter nach einem der Ansprüche 1 oder 2, **dadurch gekennzeichnet, dass** der Außenverschluss (12) einen kleinen Vorsprung (70) enthält, der an einem gesamten Umfang einer oberen Endfläche des Ausflussdurchgangs (16R) ausgebildet ist.

4. Verschluss für den Getränkebehälter nach Anspruch 3, **dadurch gekennzeichnet, dass** der kleine Vorsprung (70) eine im Wesentlichen rechteckige Querschnittsform aufweist, die eine Höhe von nicht weniger als 1,0 mm und eine Breite von nicht weniger als 2,2 mm aufweist.

5. Verschluss für den Getränkebehälter nach einem der Ansprüche 1 bis 4, **dadurch gekennzeichnet, dass** die Innenschraube (21) und die Außenschraube (22) Doppelgewindeschrauben sind.

## Revendications

1. Bouchon pour récipient de boisson, **caractérisé en ce qu'**il comprend:
un bouchon extérieur (12) monté dans une section d'ouverture supérieure (2) d'un corps de récipient de boisson (1), ledit bouchon extérieur (12) ayant un passage de sortie (16R) formé à l'intérieur;
un bouchon intérieur (13) monté dans une section d'ouverture supérieure (12J) dudit bouchon extérieur (12) ;
une vis intérieure (21) ayant un filetage prévu en continu sur une surface circonférentielle intérieure dudit bouchon extérieur (12), ladite vis intérieure (21) permettant de visser ledit bouchon intérieur (13) dans ledit bouchon extérieur (12);
une vis extérieure (22) ayant un filetage prévu sur une surface circonférentielle extérieure dudit bouchon intérieur (13), ladite vis extérieure (22) correspondant à ladite vis intérieure (21);
un passage d'écoulement (61) prévu sur ledit bouchon intérieur (13), ledit passage d'écoulement (61) étant formé en découpant verticalement au moins une partie du filetage de ladite vis extérieure (22); et
une paroi de commande de passage d'écoulement (64J) prévue sur une partie supérieure dudit passage d'écoulement (61), ladite paroi de commande de passage d'écoulement (64J) étant inclinée vers le haut et vers l'extérieur,
**caractérisé en ce que** ledit bouchon intérieur (13) comprend une paroi latérale de commande de passage d'écoulement (63) prévue sur une région latérale supérieure adjacente audit passage d'écoulement (61), ladite paroi latérale de commande de passage d'écoulement (63) étant formée de façon continue dans une direction verticale.

2. Bouchon pour récipient de boisson selon la revendication 1, **caractérisé en ce que** ledit bouchon intérieur (13) comprend une paroi de bouchon à vis (21U, 21S); ledit bouchon extérieur (12) comprend une partie de bouchon à vis (22U, 22S) correspondant à ladite paroi de bouchon à vis (22U, 22S); et ledit passage d'écoulement (61) est ouvert avant que ledit bouchon intérieur (13) ait été tourné en demi-cercle à partir d'un état de fermeture de passage d'écoulement dans lequel ladite paroi de bouchon à vis (22U, 22S) et ladite partie de bouchon à vis (21U, 21S) sont en butée l'une contre l'autre.

3. Bouchon pour récipient de boisson selon la revendication 1 ou la revendication 2, **caractérisé en ce que** ledit bouchon extérieur (12) comprend une petite saillie (70) formée sur toute la circonférence d'une surface d'extrémité supérieure dudit passage de sortie (16R).

4. Bouchon pour récipient de boisson selon la revendication 3, **caractérisé en ce que** ladite petite saillie (70) a une forme de section transversale sensiblement rectangulaire présentant une hauteur non inférieure à 1,0 mm et une largeur non supérieure à 2,2 mm.

5. Bouchon pour récipient de boisson selon l'une quelconque des revendications 1 à 4, **caractérisé en ce que** ladite vis intérieure (21) et ladite vis extérieure (22) sont des vis à double filetage.
